# EUROPEAN PATENT SPECIFICATION

(11) **EP 0 605 062 B1**
(45) Date of publication and mention of the grant of the patent: **14.07.1999**
(21) Application number: 93203715.3
(22) Date of filing: 28.12.1993
(51) Int. Cl.: C08G 67/02

(54) **Preparation of co-polymers of carbon monoxide and ethylenically unsaturated compounds**
Herstellung von Copolymeren aus Kohlenmonoxid und ethylenisch ungesättigten Verbindungen
Préparation de copolymères de monoxyde de carbone et de composés éthyléniquement insaturés

(30) Priority: 31.12.1992 EP 92204117
(43) Date of publication of application: 06.07.1994
(73) Proprietor: SHELL INTERNATIONALE RESEARCH MAATSCHAPPIJ B.V., 2596 HR Den Haag (NL)
(72) Inventor: Smedt, Philip Jean Marie Maurice, NL-1031 CM Amsterdam (NL); Mulder, Jan Harm, NL-1031 CM Amsterdam (NL); Muijs, Herman Mathieu, NL-1031 CM Amsterdam (NL)

(56) References cited:
- EP-A- 0 305 011
- EP-A- 0 336 459
- EP-A- 0 339 744
- EP-A- 0 448 177
- EP-A- 0 460 743

## Description

The invention relates to a process for the preparation of co-polymers of carbon monoxide and one or more ethylenically unsaturated compounds.

Linear co-polymers of carbon monoxide with one or more ethylenically unsaturated compounds, in which co-polymers the units originating from carbon monoxide on the one hand and the units originating from the ethylenically unsaturated compound(s) used on the other hand occur in a substantially alternating arrangement, can be prepared by contacting the monomers at an elevated temperature and pressure, in the presence of a diluent in which the co-polymers are insoluble or virtually insoluble, with a suitable catalyst. The preparation of the co-polymers can, in principle, be carried out in two manners, viz. batchwise or continuously.

Batchwise preparation of the co-polymers is generally carried out by introducing catalyst into a reactor containing diluent and monomers and which is at the desired temperature and pressure. As polymerization proceeds, the pressure drops, the concentration of the co-polymers in the diluent increases and the viscosity of the suspension rises.

The reaction is discontinued when the viscosity becomes very high because of severe agglomeration of co-polymer particles and further continuing could create difficulties in view of poor heat transfer in the suspension and stirring problems.

In principle, the only parameter which remains constant in batchwise co-polymer preparation is the temperature. A variant of batchwise co-polymer preparation is semi-batchwise preparation in which besides the temperature also the pressure is kept constant by adding monomers to the reactor during the polymerization.

In continuous co-polymer preparation, a diluent, monomers and catalyst are continuously added to a reactor containing monomers and a certain volume of the diluent and which is at the desired temperature and pressure and a co-polymer suspension is continuously withdrawn from it. During the continuous co-polymer preparation, the temperature, the pressure and the liquid volume in the reactor are kept substantially constant. After a start-up period in which the co-polymer concentration in the suspension increases to the desired value, a stationary state is reached which is characterized, inter alia, by the suspension withdrawn from the reactor having a substantially constant co-polymer content and the co-polymers contained therein having substantially constant properties.

One of the important properties of the co-polymers in question is the bulk density. This plays an important role both in the preparation and in the treatment, storage, transport and processing of the co-polymers. As far as co-polymer preparation is concerned, the rule of thumb is that the maximum permissible suspension concentration, expressed in (kg co-polymer/kg suspension) x 100, is about one tenth of the bulk density expressed in kg/m³. This means that in the preparation of a co-polymer with a bulk density of 100 kg/m³, the maximum suspension concentration is about 10%, whereas in the preparation of a co-polymer with a bulk density of 200 kg/m³, the maximum suspension concentration is about 20%. Hence a doubling of bulk density offers the possibility of preparing about twice the quantity of co-polymer in the same reactor volume. As far as co-polymer treatment, such as filtering, washing and drying, is concerned, the quantity of adhering liquid is largely determined by the co-polymer bulk density. Thus it has been found, for example, that a co-polymer with a bulk density of 100 kg/m³ binds approx. 5 kg diluent or washing liquid per kg, whereas to a co-polymer with a bulk density of 200 kg/m³ considerably less liquid is bound. This is naturally of great importance on account of the quantity of liquid that must be used in washing the co-polymers and must be removed when the co-polymers are dried. As far as transport and storage are concerned, the rule is that the higher the co-polymers' bulk density, the more attractive the flow behaviour they will have and the less space they will occupy. As regards the processing of the co-polymers into shaped objects, it is often the case that co-polymers with low bulk density cause problems in the processing apparatus. For co-polymers with low bulk density, e.g. of below 250 kg/m³, a compacting treatment, for example by extrusion, in order to make them suitable for further processing in the usual equipment for that purpose,could form a problem. The higher the co-polymers' bulk density, the easier the prior treatment of the material, in particular an extrusion, will be.

It will be clear from the above that the main interest is in a process whereby a relatively high suspension concentration is achieved and whereby co-polymers having a high bulk density are produced.

However, a complication is formed by the above-mentioned agglomeration of co-polymer particles, which may occur, before the suspension concentration has reached a value required for obtaining co-polymers in an adequate yield.

An investigation of this phenomenum has revealed that the moment of severe agglomeration can be somewhat postponed by increasing the amount of catalyst used. However, in particular when operating the process on technical scale, for economic reasons the use of larger quantities of catalyst is undesirable.

Surprisingly it has now been found that there is a very narrow class of surface active compounds which, when present in a minor amount in the reaction mixture of the preparation of the co-polymers, delay the agglomeration of co-polymer particles, substantially without adversely effecting the rate of polymerization and the properties of the co-polymers obtained, such as their heat stability. This narrow class of surface active compounds comprises non-ionic surfactants selected from alkoxylates of a monohydric alcohol and polymers of a vinyl amide monomer. The use of other surface active compounds does not lead to the desired delay of agglomeration, and/or it leads to a lower polymerisation rate and/or, quite unexpectedly, to an appreciable decrease of the heat stability of the co-polymers prepared.

The invention therefore relates to a process for the preparation of co-polymers of carbon monoxide and one or more ethylenically unsaturated compounds by reacting the monomers under polymerization conditions in the presence of a catalyst system based on
a) a source of cations of one or more metals of Group VIII of the Periodic Table, and
b) a source of anions,
in the further presence of a diluent in which the co-polymers are insoluble or virtually insoluble and of a minor amount of one or more non-ionic surfactants selected from alkoxylates of a monohydric alcohol and polymers of a vinyl amide monomer.

The metals of Group VIII of the Periodic Table include the noble metals palladium, rhodium, osmium, ruthenium, iridium and platinum and the metals of the iron group consisting of iron, cobalt and nickel. Of these, palladium, nickel and cobalt are preferred, in particular palladium.

As source of cations of one or more of these metals conveniently a salt of the metal(s) selected, is used. Suitable salts include salts of mineral acids such as sulphuric acid, nitric acid and phosphoric acid and of sulphonic acids such as methane sulphonic acid, trifluoromethanesulphonic acid and para-toluene-sulphonic acid. Other suitable salts include salts of carboxylic acids, such as acetic acid, trifluoroacetic acid, propionic acid and citric acid. Furthermore, as cations source use may be made of the metals in their elemental form, or in a zero-valent state thereof, e.g. in complex form. Usually these sources are applied together with a protic acid, so that the metal cations are formed in situ.

The source of anions (component b) on which the catalyst system of the invention is based, is conveniently an acid or salt thereof. A skilled person will appreciate that the anions of component b) are weakly or non-coordinating with the Group VIII metal cations. As suitable acids, the aforesaid acids participating in the Group VIII metal salts may be mentioned. Preferred anion sources are those from acids having a pKa value (measured at 18 °C in aqueous solution) of less than 4, in particular of less than 2.

Preferred examples of anion sources are trifluoroacetic acid and p-toluenesulphonic acid and furthermore perchloric acid and tetrafluoroboric acid.

Advantageously, the catalyst systems of the invention comprise, in addition to components a) and b), a stabilizing ligand, containing one or more sites which can form a complexing bond with a metal of Group VIII. Thus the ligands may be monodentate, bidentate or even tridentate. Bidentate ligands, containing two sites forming complexing bonds with a Group VIII metal are preferred. In particular preferred are bidentate ligands of the formula

R¹R²M¹-R-M²R³R⁴ (I)

wherein R¹, R², R³ and R⁴ independently represent optionally substituted hydrocarbylgroups, R represents a bivalent bridging group having 1 to 5 atoms in the bridge and M¹ and M² represent the same or different atoms selected from phosphorus, arsenic, antimony or nitrogen atoms.

Preferably M¹ and M² both represent phosphorus atoms. R represents preferably a bivalent organic bridging group containing at least two carbon atoms in the bridge, in particular three carbon atoms.

The optionally substituted hydrocarbylgroups R¹, R², R³ and R⁴ may be aryl, alkyl, alkaryl, aralkyl or cycloalkyl groups. Preferably they represent arylgroups and in particular aryl groups substituted by one or more polar groups such as alkoxy, alkylamino and dialkylamino groups and halogen atoms. Most preferred are phenyl groups wherein one or both ortho positions with respect to M¹ or M², are substituted with an alkoxy group, preferably a methoxy group.

Examples of suitable monodentate ligands may be indicated by the formula M³R¹R²R³ wherein M³ represents a phosphorus, arsenic or antimony atom and R¹, R² and R³ have the aforesaid meaning.

The amount of catalyst used in the process of the invention may vary considerably. Advantageously an amount is applied in the range of 10⁻⁷ to 10⁻¹ gramatom of Group VIII metal(s) per mole of ethylenically unsaturated compound to be polymerized. Preferably the amount is in the range of 10⁻⁶ to 10⁻² on the same basis.

The co-polymers of the invention are insoluble or at least virtually insoluble in many conventional liquid solvents and accordingly a large number of these liquids may serve as diluent in the process of the invention.

Recommended diluents are polar organic liquids, such as ketones, ethers, esters or amides. Preferably a protic liquid is used such as monohydric or dihydric alcohols. Lower monohydric alcohols are preferred diluents, e.g. methanol, ethanol and butanol-1. Methanol is in particular preferred.

Without wishing to be bound by any theory, it is believed that the surfactant(s) present in the process of the invention contribute to the sterical stability of the suspension. Conceivably, the surface area of co-polymer particles in the suspension is at least partly covered by surfactant molecules, which delays the agglomeration of the co-polymer particles until the suspension concentration has reached a value, significantly higher than would have been reached in the absence of surfactant(s).

The surfactants according to this invention are non-ionic surfactants selected from alcoholalkoxylates and polymers of a vinyl amide monomer. Typically the alcoholalkoxylates are conceivably derived from 1,2-alkylene oxides, in particular ethene oxide or 1,2-propene oxide, and from monohydric alkanols or alkyl substituted phenols comprising an aromatic system of one or more rings, typically one ring, the monohydric alkanols and the alkyl substituted phenols having typically from 7 to 25 carbon atoms.

Preferred non-ionic surfactants of this invention are alkanolethoxylates defined by the formula

CH₃-(CH₂)ₙ-O(-CH₂-CH₂-O)ₘ-H (II)

wherein n is an integer in the range of 8 to 18 and m is an integer in the range of 1 to 6. The representatives of this category comprise a non polar moiety conceivably derived from linear alkenes and a polar moiety conceivably derived from one or more ethylene oxide groups. Preferably the non-polar moiety comprises from 12 to 15 carbon atoms. The number of ethylene oxy groups involved in the polar moiety is preferably between 2 and 4, in particular 3. Many of these compounds are commercially available surfactants, such as DOBANOL 25-3 (Trade Mark).

Other preferred non-ionic surfactants are alkylphenolalkoxylates such as nonylphenol ethoxylate - 10 EO (ethylene oxide) and nonylphenol ethoxylate - 20 EO, surfactants containing a branched non polar moiety and a polar moiety e.g. derived from (a number of) ethylene oxide groups.

Examples of the polymers of a vinyl amide monomer are polyacrylamide, polymethacrylamide and polyvinylpyrrolidone, the latter being a preferred surfactant. The polymers of a vinyl amide monomer have typically a number average molecular weight in the range of from 5x10³ to 10⁶, more typically in the range of from 5x10³ to 10⁵. Very good results can be obtained with commercially available polyvinylpyrrolidone having a number average molecular weight of about 10000.

In the process of the invention only minor amounts of surfactants are used. Generally the amount is well below 20 g per litre of reaction mixture, in most cases below 10 g on the same basis. Preferred amounts are in the range of 0.7 to 5 g per litre of reaction mixture.

The surfactant(s) may be supplied to the reactor before the co-polymerization reaction starts, or during that reaction. If surfactants are supplied before, or at an early stage of the reaction, it is recommended to supply only a small portion of the total amount of surfactants intended to use. It is preferred to supply the surfactants during the process in equal, small increments or continuously to the reactor.

Ethylenically unsaturated compounds, suitable to be used as starting material, include unsaturated compounds consisting exclusively of carbon and hydrogen and compounds comprising in addition one or more hetero-atoms, such as oxygen or nitrogen atoms. Examples are unsaturated esters, such as methyl acrylate and vinyl acetate. Unsaturated hydrocarbons are, however, preferred. Suitable examples are the lower olefins, such as ethene, propene and 1-butene, cyclic olefins such as cyclopentene and aryl-substituted olefins such as styrene. Ethene and mixtures of ethene and propene are in particular preferred starting materials.

The molar ratio between the monomer reactants, viz. on the one hand carbon monoxide and on the other hand the ethylenically unsaturated compound(s), is advantageously selected in the range of 5:1 to 1:5, preferably in the range of 1.5:1 to 1:1.5, substantially equimolar amounts being most preferred.

The reaction is generally performed at temperatures in the range of 20 to 180 °C and at pressures in the range of 2 to 150 bar. Preferred reaction temperatures are in the range of 30 to 150 ° C and preferred pressures are selected in the range of 20 to 100 bar.

The co-polymers prepared according to the invention have established utility in various outlets for thermoplastics. They may be processed by means of conventional techniques into films, sheets, plates, fibres, shaped articles such as containers for food and drinks and parts for the car industry.

The invention will now be illustrated by the following examples.

### Example 1

A carbon monoxide/ethene co-polymer was prepared as follows:

An autoclave with a capacity of 3.78 l and equipped with a mechanical stirrer with 2 baffles, operated at 600 rpm, was charged with 1500 ml of methanol.

The air present in the autoclave was removed therefrom by pressurizing the autoclave with carbon monoxide to 15 bar and then releasing the pressure. This procedure was repeated twice. Under stirring the contents of the autoclave were brought to a temperature of 86 °C and a 2:1 mixture of carbon monoxide and ethene was supplied until the pressure was 25 bar. Subsequently a catalyst solution was introduced consisting of 0.013 mmol palladium (II) trifluoroacetate (1.4 mg palladium), 0014 mmol 1,3-bis[bis(2-methoxyphenyl)phosphino] propane and 0.18 mmol trifluoroacetic acid (TFA).

During the reaction period the temperature and pressure were kept constant. After seven runhours, 3 g of a surfactant, DOBANOL 25-3 (Trade Mark), a commercially available condensation product of a mixture of n-alkanols with 12 to 15 carbonatoms and on average 3 mol ethene oxide per mol alkanol, was added.

As soon as agglomeration occurred, the formed suspension became stagnant and the process was discontinued.

The contents of the autoclave were cooled to ambient temperature and the pressure was released.

The results, as regards LVN of the co-polymer obtained, reaction period, suspension concentration and bulk density at the moment of agglomeration, are shown in the Table. LVN (limiting viscosity number) is the intrinsic viscosity, calculated from determined viscosity values, measured for different co-polymer concentrations in m-cresol at 60 °C.

### Example 2

A carbon monoxide/ethene co-polymer was prepared, substantially as described in Example 1, with the difference that as surfactant 3 g of nonylphenol ethoxylate 10 EO (ethene oxide) was added, instead of DOBANOL 25-3. The results are shown in the Table.

### Example 3

A carbon monoxide/ethene co-polymer was prepared, substantially as described in Example 1, with the difference that as surfactant 3 g of nonylphenol ethoxylate 20 EO was added, instead of DOBANOL 25-3. The results are shown in the Table.

### Example 4

A carbon monoxide/ethene co-polymer was prepared, substantially as described in Example 1, with the difference that after 5, 6 and 27 runhours, respectively, portions of 0.5 g of polyvinylpyrrolidone (number average molecular weight 10000) were added as surfactant, instead of DOBANOL 25-3. The results are shown in the Table.

### Example A (for comparison)

A carbon monoxide/ethene co-polymer was prepared, substantially as described in Example 1, with the difference that as surfactant 3 g of tallow acid diethanolamide (TA DEA) was added, instead of DOBANOL 25-3. After the addition of surfactant complete deactivation of the catalyst was observed, whereupon the process was discontinued. Further details are shown in the Table.

### Example B (for comparison)

A carbon monoxide/ethene co-polymer was prepared, substantially as described in Example 1, with the difference that as surfactant 3 g of coconut fatty acid diethanolamide (C DEA) was added, instead of DOBANOL 25-3. After the addition of surfactant complete deactivation of the catalyst was observed, whereupon the process was discontinued. Further details are shown in the Table.

### Example C (for comparison)

A carbon monoxide/ethene co-polymer was prepared, substantially as described in Example 1, with the difference that after 5, 6 and 7 runhours, respectively, portions of 0.5 g of a block copolymer of 90 %w propylene glycol and 10 %w ethylene glycol (PO EO) were added as surfactant. The results are shown in the Table.

### Example D (for comparison)

A carbon monoxide/ethene co-polymer was prepared, substantially as described in Example 1, with the difference that no surfactant was added. The results are shown in the Table.

### Example E (for comparison)

A carbon monoxide/ethene co-polymer was prepared, substantially as described in Example D, with the difference that the amount of trifluoroacetic acid was 0.11 mmol, instead of 0.18 mmol. The results are shown in the Table.

### Example F (for comparison)

A carbon monoxide/ethene co-polymer was prepared, substantially as described in Example D, with the difference that the amount of palladium was 0.7 mg, instead of 1.4 mg and the amount of trifluoracetic acid was 0.11 mmol, instead of 0.18 mmol. The results are shown in the Table.

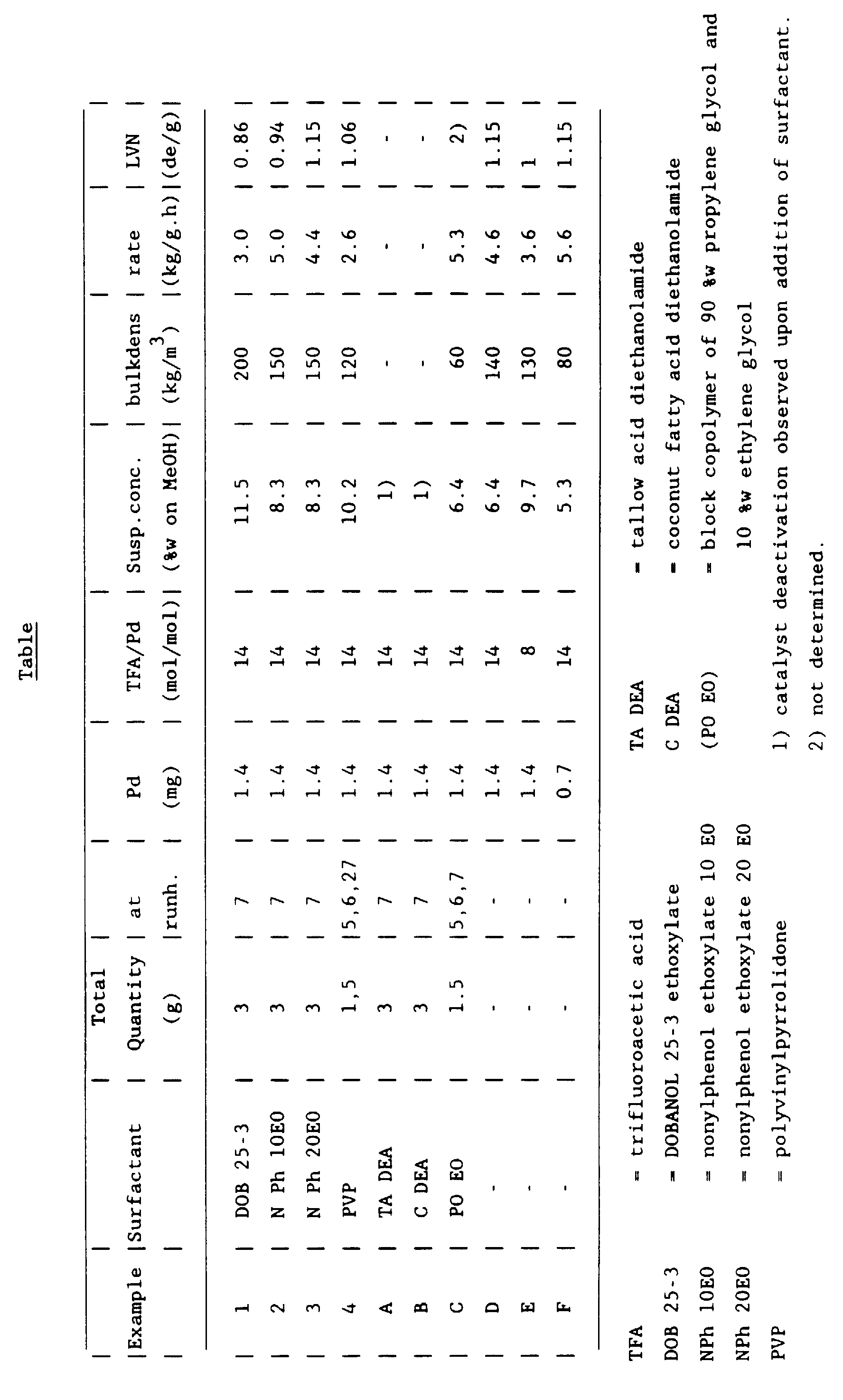

## Claims

1. A process for the preparation of co-polymers of carbon monoxide and one or more ethylenically unsaturated compounds by reacting the monomers under polymerization conditions in the presence of a catalyst system based on
a) a source of cations of one or more metals of Group VIII of the Periodic Table, and
b) a source of anions,
in the further presence of a diluent in which the co-polymers are insoluble or virtually insoluble and of a minor amount of one or more non-ionic surfactants selected from alkoxylates of a monohydric alcohol and polymers of a vinyl amide monomer.

2. A process as claimed in claim 1, characterized in that a catalyst system is used which is based on a source of cations of palladium as component a), and b, and in that the catalyst system contains in addition a diphosphine of the formula
R¹R²P-R-P-R³R⁴ (I)
wherein R¹, R², R³ and R⁴ independently represent hydrocarbyl groups or hydrocarbyl groups substituted with one or more polar groups and R represents a bivalent bridging group containing at least two carbon atoms in the bridge.

3. A process as claimed in claim 2, characterized in that in the bidentate ligand of the formula (I) R¹, R², R³ and R⁴ represent phenyl groups substituted at one or both ortho-positions by a polar group, in particular an alkoxy group, and R represents a bivalent bridging group containing 3 carbon atoms in the bridge.

4. A process as claimed in any of claims 1-3, characterized in that as diluent an organic protic liquid is used.

5. A process as claimed in claim 4, characterized in that as diluent a lower alcohol is used, in particular methanol.

6. A process as claimed in any of claims 1-5, characterized in that as non-ionic surfactant one or more compounds of the formula
CH₃-(CH₂)ₙ-O(CH₂-CH₂-O)ₘ-H (II)
are used, wherein n is an integer in the range of 8 to 18 and m is an integer in the range of 1 to 6.

7. A process as claimed in claim 6, characterized in that in the compounds of formula (II) n is an integer from 11 to 14 and m is 3.

8. A process as claimed in any of claims 1-5, characterized in that as non-ionic surfactant poly(vinylpyrrolidine) is used having a number average molecular weight in the range of from 5x10³ to 10⁵.

9. A process as claimed in any of claims 1-8, characterized in that the amount of non-ionic surfactant(s) used is in the range of 0.7 to 5 g per litre of reaction mixture.

10. A process as claimed in any of claims 1-9, characterized in that the surfactant(s) is (are) added to the reactor continuously during the process.

11. A process as claimed in any of claims 1-10, characterized in that as ethylenically unsaturated compound ethene or a mixture of ethene and propene is used, the molar ratio between carbon monoxide relative to ethylenically unsaturated compound(s) being in the range of 1.5:1 and 1:1.5, and in that the reaction is carried out at a temperature in the range of 30 to 150 °C, at a pressure in the range of 20 to 100 bar and using a quantity of catalyst which contains 10⁻⁶ to 10⁻² gramatom of Group VIII metal per mole of ethylenically unsaturated compound to be polymerized.

## Patentansprüche

1. Verfahren zur Herstellung von Copolymeren aus Kohlenmonoxid und einer oder mehreren ethylenisch ungesättigten Verbindungen durch Umsetzen der Monomeren unter Polymerisationsbedingungen in Anwesenheit eines Katalysatorsystems auf der Basis von
a) einer Quelle von Kationen eines oder mehrerer Metalle der Gruppe VIII des Periodensystems und
b) einer Quelle von Anionen,
in weiterer Anwesenheit eines Verdünnungsmittels, worin die Copolymere unlöslich oder praktisch unlöslich sind, und einer kleinen Menge eines oder mehrerer nichtionischer Surfactantien, ausgewählt unter Alkoxylaten eines einwertigen Alkohols und Polymeren eines Vinylamidmonomers.

2. Verfahren nach Anspruch 1, dadurch gekennzeichnet, daß ein Katalysatorsystem eingesetzt wird, das auf einer Quelle von Kationen von Palladium als Komponente a) und auf b) beruht und daß das Katalysatorsystem zusätzlich ein Diphosphin der Formel
R¹R²P-R-P-R³R⁴ (I)
enthält, worin R¹, R², R³ und R⁴ unabhängig voneinander für Hydrocarbylgruppen oder durch eine oder mehrere polare Gruppen substituierte Hydrocarbylgruppen stehen und R eine zweiwertige Brückengruppe mit einem Gehalt an wenigstens zwei Kohlenstoffatomen in der Brücke darstellt.

3. Verfahren nach Anspruch 2, dadurch gekennzeichnet, daß in dem Bidentatliganden der Formel (I) R¹, R², R³ und R⁴ Phenylgruppen darstellen, die an einer oder an beiden Orthostellungen durch eine polare Gruppe, insbesondere eine Alkoxygruppe, substituiert sind und R eine zweiwertige Brückengruppe darstellt, die drei Kohlenstoffatome in der Brücke enthält.

4. Verfahren nach einem der Ansprüche 1 bis 3, dadurch gekennzeichnet, daß als Verdünnungsmittel eine organische protische Flüssigkeit verwendet wird.

5. Verfahren nach Anspruch 4, dadurch gekennzeichnet, daß als Verdünnungsmittel ein niederer Alkohol, insbesondere Methanol, verwendet wird.

6. Verfahren nach einem der Ansprüche 1 bis 5, dadurch gekennzeichnet, daß als nichtionisches Surfactant eine oder mehrere Verbindungen der Formel
CH₃-(CH₂)ₙ-O(CH₂-CH₂-O)ₘ-H (II)
verwendet werden, worin n eine ganze Zahl im Bereich von 8 bis 18 ist und m eine ganze Zahl im Bereich von 1 bis 6 bedeutet.

7. Verfahren nach Anspruch 6, dadurch gekennzeichnet, daß in den Verbindungen (II) n eine ganze Zahl von 11 bis 14 bedeutet und m den Wert 3 hat.

8. Verfahren nach einem der Ansprüche 1 bis 5, dadurch gekennzeichnet, daß als nichtionisches Surfactant Poly(vinylpyrrolidon) mit einem zahlenmittleren Molekulargewicht im Bereich von 5x10³ bis 10⁵ verwendet wird.

9. Verfahren nach einem der Ansprüche 1 bis 8, dadurch gekennzeichnet, daß die eingesetzte Menge an nichtionischen Surfactantien im Bereich von 0,7 bis 5 g pro Liter Reaktionsgemisch liegt.

10. Verfahren nach einem der Ansprüche 1 bis 9, dadurch gekennzeichnet, daß das Surfactant bzw. die Surfactantien kontinuierlich während des Verfahrens dem Reaktor zugesetzt wird bzw. werden.

11. Verfahren nach einem der Ansprüche 1 bis 10, dadurch gekennzeichnet, daß als ethylenisch ungesättigte Verbindung Ethen oder ein Gemisch aus Ethen und Propen verwendet wird, wobei das Molverhältnis von Kohlenmonoxid zu der bzw. zu den ethylenisch ungesättigten Verbindung(en) im Bereich von 1,5:1 bis 1:1,5 liegt und wobei die Reaktion bei einer Temperatur im Bereich von 30 bis 150°C, bei einem Druck im Bereich von 20 bis 100 bar und unter Anwendung einer Katalysatormenge ausgeführt wird, die 10⁻⁶ bis 10⁻² Grammatom Gruppe VIII-Metall pro Mol ethylenisch ungesättigter, zu polymerisierender Verbindung enthält.

## Revendications

1. Procédé de préparation de copolymères de monoxyde de carbone et d'un ou plusieurs composés éthyléniquement insaturés par la réaction des monomères sous des conditions de polymérisation en présence d'un système de catalyseur à base de :
a) une source de cations d'un ou plusieurs métaux du Groupe VIII du Tableau Périodique, et
b) une source d'anions,
en la présence supplémentaire d'un diluant dans lequel les copolymères sont insolubles ou pratiquement insolubles et d'une petite quantité d'un ou plusieurs agents tensioactifs non ioniques choisis parmi les alcoxylates d'un alcool monoatomique et les polymères d'un monomère d'amide vinylique.

2. Procédé suivant la revendication 1, caractérisé en ce qu'on utilise un système de catalyseur qui est à base d'une source de cations de palladium comme composant a), et de b), et en ce que le système de catalyseur contient en plus une diphosphine de la formule :
R¹R²P-R-P-R³R⁴ (I)
dans laquelle R¹, R², R³ et R⁴ représentent indépendamment des groupes hydrocarbyle ou des groupes hydrocarbyle substitués par un ou plusieurs groupes polaires et R représente un groupe de pontage bivalent contenant au moins 2 atomes de carbone dans le pont.

3. Procédé suivant la revendication 2, caractérisé en ce que dans le ligand bidenté de la formule (I) R¹, R², R³ et R⁴ représentent des groupes phényle substitués à une ou aux deux positions ortho par un groupe polaire, en particulier un groupe alcoxy, et R représente un groupe de pontage bivalent contenant 3 atomes de carbone dans le pont.

4. Procédé suivant l'une quelconque des revendications 1 à 3, caractérisé en ce qu'on utilise comme diluant un liquide protique organique.

5. Procédé suivant la revendication 4, caractérisé en ce qu'on utilise comme diluant un alcool inférieur, en particulier du méthanol.

6. Procédé suivant l'une quelconque des revendications 1 à 5, caractérisé en ce qu'on utilise comme agent tensioactif non ionique un ou plusieurs composés de la formule :
CH₃-(CH₂)ₙ-O(CH₂-CH₂-O)ₘ-H (II)
dans laquelle n est un nombre entier dans la gamme de 8 à 18 et m est un nombre entier dans la gamme de 1 à 6.

7. Procédé suivant la revendication 6, caractérisé en ce que dans les composés de formule (Il) n est un nombre entier de 11 à 14 et m est égal à 3.

8. Procédé suivant l'une quelconque des revendications 1 à 5, caractérisé en ce que comme agent tensioactif non ionique on utilise de la poly(vinylpyrrolidone) ayant un poids moléculaire moyen numérique dans la gamme de 5 x 10³ à 10⁵.

9. Procédé suivant l'une quelconque des revendications 1 à 8, caractérisé en ce que la quantité d'agent(s) tensioactif(s) non ionique(s) se situe dans la gamme de 0,7 à 5 g par litre de mélange réactionnel.

10. Procédé suivant l'une quelconque des revendications 1 à 9, caractérisé en ce que le(s) agent(s) tensioactif(s) est (sont) ajoutés au réacteur de façon continue au cours du procédé.

11. Procédé suivant l'une quelconque des revendications 1 à 10, caractérisé en ce que comme composé éthyléniquement insaturé on utilise de l'éthène ou un mélange d'éthène et de propène, le rapport molaire entre le monoxyde de carbone par rapport au(x) composé(s) éthyléniquement insaturé(s) se situant dans la gamme de 1,5/1 et 1/1,5, et en ce que la réaction est réalisée à une température dans l'intervalle de 30 à 150°C, à une pression dans la gamme de 20 à 100 bars et en utilisant une quantité de catalyseur qui contient 10⁻⁶ à 10⁻² atome-gramme de métal du Groupe VIII par mole de composé éthyléniquement insaturé à polymériser.
